(19) Europäisches Patentamt
European Patent Office
Office européen des brevets

(11) **EP 2 009 077 A1**

(12) **EUROPEAN PATENT APPLICATION**

(43) Date of publication:
**31.12.2008 Bulletin 2009/01**

(51) Int Cl.:
***C09K 11/59*** (2006.01)

(21) Application number: **07111382.3**

(22) Date of filing: **29.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Leuchtstoffwerk Breitungen GmbH
98597 Breitungen (DE)**

(72) Inventors:
• **Duan, Cheng-Jun
  5612 AR Eindhoven (NL)**

• **Hintzen, Hubertus Theresia
  5646Je Eindhoven (NL)**
• **Rösler, Sylke
  99817 Eisenach (DE)**
• **Rösler, Sven
  99817 Eisenach (DE)**
• **Starick, Detlef
  17489 Greifswald (DE)**

(74) Representative: **Engel, Christoph Klaus
  Engel Patentanwaltskanzlei
  Marktplatz 6
  98527 Suhl/Thüringen (DE)**

(54) **Manganese-doped metal-silicon-nitrides phosphors**

(57) Mn-doped $M_2Si_5N_8$ (M = Ca, Sr, Ba) phosphors have been prepared by a solid state reaction method at high temperature and their photoluminescence properties were investigated. The $Mn^{2+}$-activated $M_2Si_5N_8$ phosphors exhibit narrow emission bands in the wavelength range of 500-700 nm with peak centers at about 599, 606 and 567 nm for M = Ca, Sr, Ba, respectively, due to the $^4T_1(^4G)$?$^6A_1(^6S)$ transition of $Mn^{2+}$. The long-wavelength excitation and emission of $Mn^{2+}$ ions in the host of $M_2Si_5N_8$ are attributed to the effect of a strong crystal field of $Mn^{2+}$ in the nitrogen environment. It is observed that there exists energy transfer between $M_2Si_5N_8$ host lattice and activator ($Mn^{2+}$). The potential applications of these phosphors have been pointed out.

Fig. 4

**Description**

**BACKGROUND**

Recently, the compounds of $M_2Si_5N_8$ (M = Ca, Sr, Ba) have been intensively studied as host lattice in exploration of LED phosphors. Due to the high covalency and large crystal field effect of nitrogen anions, $Ce^{3+}$ and $Eu^{2+}$ show long wavelength emission in $M_2Si_5N_8$ host lattice (M=Ca, Sr, Ba). They have been already demonstrated to be promising conversion phosphors for white-light LEDs. Luminescence due to $Mn^{2+}$ is known to occur in a lot of inorganic compounds. Of these, several are being used widely for fluorescent lamps, cathode ray tubes (CRTs) and LED phosphors. The $Mn^{2+}$ ion usually gives broad band emission. The wavelength position of the emission bands strongly depends on the host lattice, varying from green to deep red. $Mn^{2+}$ usually gives a green emission when it is located at lattice site with a weak crystal-field, whereas it gives an orange to red emission at a strong crystal-field. As far as know, no reports have been given with regard to the luminescence properties of $Mn^{2+}$ in the nitride host lattice except for a few literatures focused on studying the luminescence properties of $Mn^{2+}$ in the $MSiN_2$(M=Mg,Zn) host lattice.

**SUMMARY OF INVENTION**

This invention discloses $Mn^{2+}$-doped metal-silicon-nitride (Metal-Si-N) phosphors.

In a preferred embodiment of the invention, the phosphor is a $Mn^{2+}$-doped metal-silicon-nitride (M-Si-N), wherein the alkaline-earth metal M is selected from the group consisting of Mg, Ca, Sr, Ba, including Zn, Be. In a further preferred embodiment of the invention, the phosphor is a $Mn^{2+}$-doped alkaline-earth metal-silicon-nitride of the formula $M_2Si_5N_8$, wherein M is selected from the group consisting of Ca, Sr, and Ba.

In a further embodiment of the invention, the phosphor is a $Mn^{2+}$-doped alkaline-earth metal-silicon-nitride with the composition $MSiN_2$, wherein M is selected from the group consisting of Mg, Ca, Sr, and Ba.

In a further embodiment of the invention, the phosphor is a $Mn^{2+}$-doped alkaline-earth metal-silicon-nitrides with the composition $MSi_7N_{10}$, wherein M is selected from the group consisting of Ca, Sr, and Ba.

In a further embodiment of the invention, the phosphor shows a general formula of:

$$Ca_{(2-x-y)}Sr_{(x)}Ba_{(y)}Si_5N_8:Mn^{2+} \text{ wherein } 0 = x = 2, \; 0 = y = 2$$

In a further embodiment of the invention, Si is replaced partially or completely by Ge:

$$M_2Si_{(5-z)}Ge_{(z)}N_8:Mn^{2+} \text{ wherein } 0 = z = 5$$

In a further embodiment of the invention, $(MSi)^{6+}$ is replaced partially or completely by $(LaAl)^{6+}$:

$$M_{(2-u)}La_{(u)}Si_{(5-u)}Al_{(u)}N_8:Mn^{2+} \text{ wherein } 0 = u = 2$$

La can be replaced partially or completely by Sc, Y and/or a lanthanide. Al can be replaced partially or completely by B, Ga and/or Sc.

In a further embodiment of the invention, $(MSi)^{6+}$ is replaced partially or completely by $(NaP)^{6+}$:

$$M_{(2-v)}Na_{(v)}Si_{(5-v)}P_{(v)}N_8:Mn^{2+} \text{ wherein } 0 = v = 2$$

Na can be replaced partially or completely by Li, K, Rb, and/or Cs.

In a further embodiment of the invention, $(MN)^-$ is replaced partially or completely by $(NaO)^-$:

$$M_{(2-w)}Na_{(w)}Si_5N_{(8-w)}O_{(w)}:Mn^{2+} \text{ wherein } 0 = w = 2$$

Na can be replaced partially or completely by Li, K, Rb, and/or Cs.

In a further embodiment of the invention, (SiN)$^+$ is replaced partially or completely by (AlO)$^+$ :

$$M_2Si_{(5-t)}Al_{(t)}N_{(8-t)}O_{(t)} :Mn^{2+} \text{ wherein } 0 = t = 5$$

Al can be replaced partially or completely by B, Ga, and/or Sc.

The concentration of the Mn$^{2+}$ activator ion covers the range from more largely zero up to 0.5 atomic portions, or in another embodiment of the invention, from more largely zero up to 50 atomic percent. In a further embodiment of the invention, the concentration of the Mn$^{2+}$ activator ion is more than 50 atomic percent.

Further rare earth ions, like Ce, Yb, Tb etc. may be doped into the phosphor and act as co-activators. Sensitizer ions like Ce$^{3+}$, Pb$^{2+}$, Sb$^{3+}$, Sn$^{2+}$, Eu$^{2+}$ etc. may be included in the phosphor for energy transfer to Mn$^{2+}$.

The concentrations of these co-activators and/or sensitizers are adjusted in the range from larger/directly zero up to 50 atomic percent.

In a further embodiment of the invention, the phosphor is protected against harmful environmental conditions like moisture, reactive gases, reactive chemicals etc. by surface coating or particle encapsulation with relevant organic or inorganic compounds. For the coating for example fluorides, phosphates, oxides or nitrides of the elements Al, Si, Ti, Y, La, Gd or Lu can be used, if they protect the phosphor particles reliably and if they exhibit optical windows for the excitation and for the emission radiation at the same time.

The coating or encapsulation can be realized for example with the help of chemical vapor deposition (CVD) or plasma enhanced CVD (PECVD).

The applied coating materials and methods are not limited to the indicated examples.

Mn$^{2+}$-doped alkaline-earth metal-silicon-nitrides can be prepared by the following way. The binary nitride pre-cursors SrN$_x$ (x~ 0-0.66) and BaN$_x$ (x~ 0-0.66) were pre-prepared by the reaction of the pure strontium metal (Aldrich, 99.9 %, pieces) and barium metal (Aldrich, 99.9 %, pieces) under flowing dried nitrogen at 800 and 550 °C, respectively, for 12 h in a horizontal tube furnace. In addition, Ca$_3$N$_2$ powder (Alfa, 98%), a-Si$_3$N$_4$ powder (Permascand, P95H, a content 93.2 %; Oxygen content: ~1.5 %) and Mn powder (Alfa, >99 %) are used as the as-received raw materials. Polycrystalline Mn-activated M$_2$Si$_5$N$_8$ (M = Ca, Sr, Ba,) powders were prepared by a solid state reaction method at high temperature. The appropriate amounts of Ca$_3$N$_2$, SrN$_x$, BaN$_x$ and Mn as well as a-Si$_3$N$_4$ powders were weighed out, subsequently mixed and ground together in an agate mortar. The powder mixtures were then transferred into molybdenum crucibles. All processes were carried out in a purified-nitrogen-filled glove-box. Subsequently those powder mixtures were fired twice (with a intermediate grinding in between) in a horizontal tube furnace at 1400 °C for 20 and 24 h, respectively, under flowing 90 % N$_2$-10 % H$_2$ atmosphere. After firing, the samples were gradually cooled down to the room temperature in the furnace. There was no apparent reaction of the prepared nitrides with the Mo crucibles. The Mn concentrations in the M$_2$Si$_5$N$_8$ host lattice are all 5 mol % with respective to the M ions. Quantities for raw materials of M$_2$Si$_5$N$_8$:Mn$^{2+}$ are for example:

(1) Ca$_2$Si$_5$N$_8$: 5 mol % Mn$^{2+}$ (0.006 mol)

Ca$_3$N$_2$=0.5633 g, a-Si$_3$N$_4$=1.4031 g, Mn= 0.033 g

(2) Sr$_2$Si$_5$N$_8$: 5 mol % Mn$^{2+}$ (0.006 mol)

SrN$_{0.3725}$=1.0584 g, a-Si$_3$N$_4$=1.4031 g, Mn= 0.033 g

(3) Ba$_2$Si$_5$N$_8$: 5 mol % Mn$^{2+}$ (0.004 mol)

BaN$_{0.685}$= 1.1166 g, a-Si$_3$N$_4$=0.9354 g, Mn= 0.022 g

The preparation method is not limited to the above described one using alkaline-earth nitride, Mn metal powder and $Si_3N_4$. Furthermore, the inventive phosphor may be synthesised by methods starting with $Si_3N_4$, Mn and alkaline-earth metal, which are in situ nitrided. Also, mixtures of Si/Mn/alkaline-earth metal may be nitrided. Further, mixtures of C or C-containing substances like SiC as well as $SiO_2$, Mn-oxides like MnO, $Mn_2O_3$ or $MnO_4$ and/or SrO or CaO may be carbothermally reduced and nitrided. An ammonolysis of $SiO_2$/ MnO, $Mn_2O_3$ or $MnO_4$ /BaO, CaO and/or SrO mixtures may be performed in $NH_3$ gas atmosphere. Furthermore, CVD reactions between alkaline-earth metal/Mn/Si-precursors and $NH_3$ may be performed. Fluxes may be used in order to control particle shape and particle size distribution.

In an embodiment of the invention, the phosphor shows excitation bands in the range of 200-500 nm.

On the other side it could be shown that the phosphors of the invention exhibit an intensive luminescence when they are excited with cathode (CR) or X-ray radiation. Since nitrides in general have a lower band gap energy (related to other host lattices), a higher energy conversion efficiency is expected.

Due to the described luminescence characteristics the phosphor according to the present invention can be used as a radiation converter for the transformation of cathode or X-rays, UV, violet or blue radiation into a longer-wave visible light that will be emitted by the phosphor preferably in green to red spectral region.

The inventive phosphor can be used in technical devices like cathode ray tubes (CRT), X-ray intensifying screens or other X-ray image converters, special laser based large screen displays, fluorescent lamps, coloured light or white emitting LED's, photovoltaic cells or greenhouse foils or glasses and many more.

The inventive phosphor can be excited by excitation sources like electron or X-ray generators, high or low-pressure discharge plasmas, UV or blue emitting organic or inorganic light emitting diodes (LED), or appropriate lasers or laser diodes, or in addition, inorganic thin, or thick electroluminescent screens.

The inventive phosphor can be used as single component in a relevant light emitting element or in combination with other red yellow, green, and/or blue-emitting phosphors in order to improve the performance of the respective application. The latter meets for example the improvement of the colour rendering indices (CRI) of fluorescent lamps and white emitting LED's.

The application of the inventive phosphors is not limited to the indicated examples.

The description of the invention is focused on the luminescence properties of Mn-doped $M_2Si_5N_8$ (M = Ca, Sr, Ba). These compounds can be used as new kinds of LED phosphors.

All measurements were performed on finely ground samples, which were analyzed by X-ray powder diffraction (Rigaku, D/MAX-B) using Cu-$K_a$ radiation at 40 kV and 30 mA with a graphite monochromator. The phase formation is checked by the normal scan (0.6°/min) in the range of 10-90° 2?. All the XRD measurements were performed at room temperature in air. All the samples are shown to be single phases and the powder X-ray diffraction patterns of undoped or Mn-doped $Ca_2Si_5N_8$, $Sr_2Si_5N_8$ and $Ba_2Si_5N_8$ samples are in good agreement with the reported powders patterns in JCPDS 82-2489, 85-101 and 85-102, respectively.

The diffuse reflectance, emission and excitation spectra of the samples were measured at room temperature by a Perkin Elmer LS 50B spectrophotometer equipped with a Xe flash lamp. The reflection spectra were calibrated with the reflection of black felt (reflection 3%) and white barium sulfate ($BaSO_4$, reflection ~100 %) in the wavelength region of 230-700 nm. The excitation and emission slits were set at 15 nm. The emission spectra were corrected by dividing the measured emission intensity by the ratio of the observed spectrum of a calibrated W-lamp and its known spectrum from 300 to 900 nm. Excitation spectra were automatically corrected for the variation in the lamp intensity by a second photomultiplier and a beam-splitter. All the spectra were measured with a scan speed of 400 nm/min. All luminescence spectra were recorded at room temperature in air.

## BRIEF DESCRIPTION OF THE DRAWINGS

The foregoing and other features and advantages of the present invention will become more readily appreciated as the same become better understood by reference to the following detailed description of the preferred embodiment of the invention when taken in conjunction with the accompanying drawings, wherein:

Fig.1    Diffuse reflectance spectra of undoped and Mn-doped $Ca_2Si_5N_8$ samples.

Fig.2    Diffuse reflectance spectra of undoped and Mn-doped $Sr_2Si_5N_8$ samples.

Fig.3    Diffuse reflectance spectra of undoped and Mn-doped $Ba_2Si_5N_8$ samples.

Fig.4    Excitation and emission spectra of Mn-activated $Ca_2Si_5N_8$ phosphor.

Fig.5    Excitation and emission spectra of Mn- activated $Sr_2Si_5N_8$ phosphor.

Fig.6    Excitation and emission spectra of Mn- activated $Ba_2Si_5N_8$ phosphor.

**DETAILED DESCRIPTION**

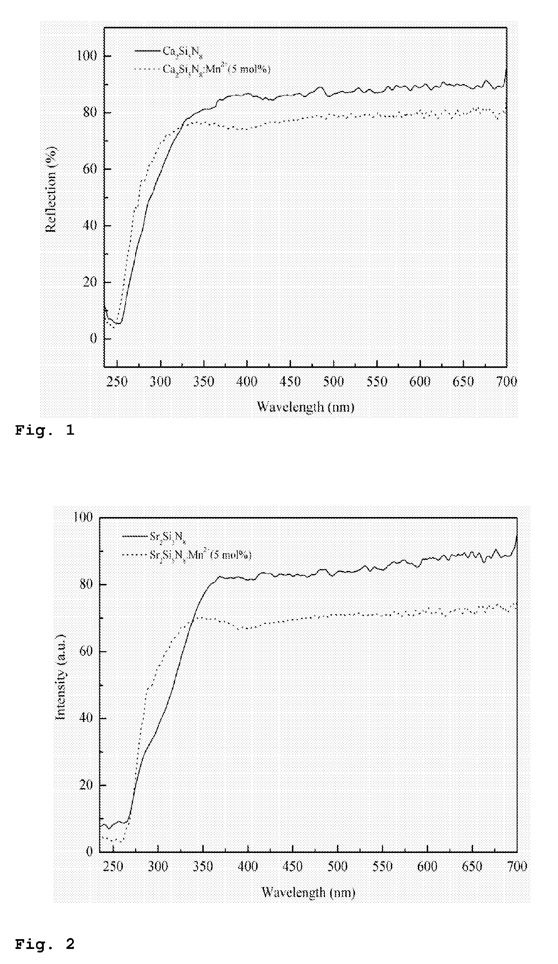

Figures 1-3 show the diffuse reflection spectra of undoped and Mn-doped $M_2Si_5N_8$ (M = Ca, Sr, Ba) samples. Both undoped and Mn-doped samples show a remarkable drop in reflection in the UV range around 300 nm with an estimated band gap at about 250 nm for M = Ca, 265 nm for M=Sr and 270 nm for M = Ba. This also have been observed in the diffuse reflection spectra of Eu-doped $M_2Si_5N_8$ (M = Ca, Sr, Ba) samples, corresponding to the valence-to-conduction band transitions of the $M_2Si_5N_8$ host lattice. The intense reflection in the visible spectral range is in agreement with the observed grey-white daylight color for undoped $M_2Si_5N_8$ samples. Obviously, there is also present a absorption band in the wavelength range of 370- 420 nm, which can be attributed to the transitions from the ground state $^6A_1$ of $Mn^{2+}$ to its excited states.

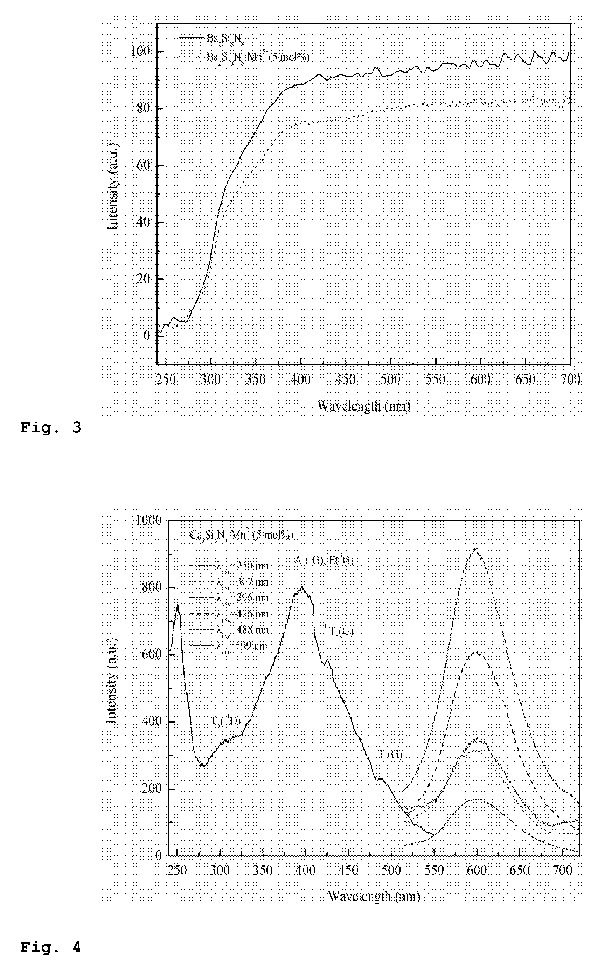

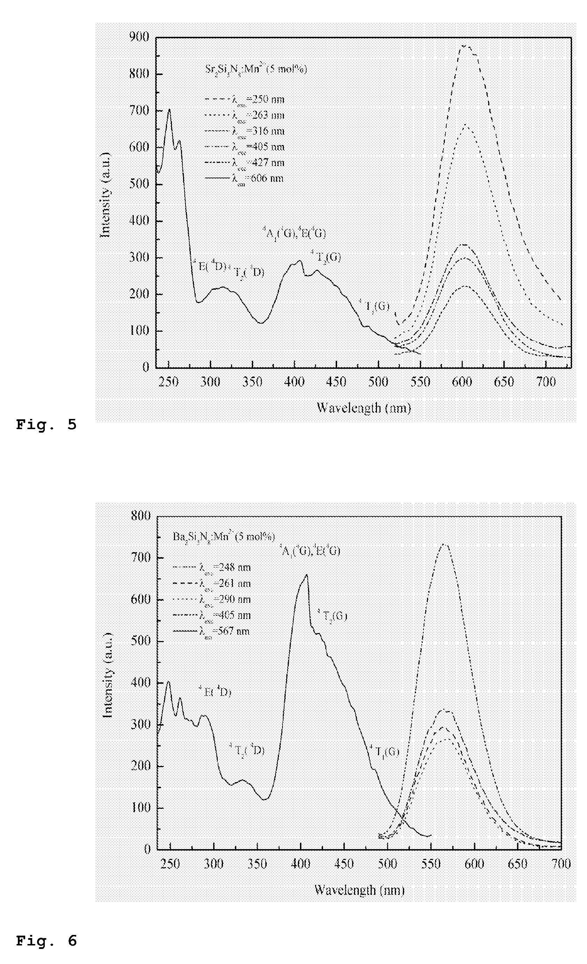

Figures 4-6 shows the excitation and emission spectra of $M_2Si_5N_8:Mn^{2+}$. As illustrated in Figures 4-6, under different wavelength light excitation, all $M_2Si_5N_8:Mn^{2+}$ phosphors show narrow symmetric bands in the wavelength range of 500-700 nm with peak center at about 599, 606 and 567 nm for M=Ca, Sr, Ba, respectively. This is ascribed to the $^4T_1$ ($^4G$)? $^6A_1$($^6S$) transition of $Mn^{2+}$. In $M_2Si_5N_8$ (M = Ca, Sr, Ba), there are present two different crystallographic M sites. Therefore, if the Mn ions occupy these two M sites, theoretically two emission bands should be observed. However, the presence of only a single narrow emission band suggests that the environment of both $Mn^{2+}$ ions is very similar or the $Mn^{2+}$ ions are not very sensitive to the change of the local structure, eventually resulting in large overlap of the two emission band of $Mn^{2+}$ in $M_2Si_5N_8$.

In the case of Mn-doped $M_2Si_5N_8$ (M = Ca, Sr, Ba), it is believed that $Mn^{2+}$ ions are loosely occupied with M sites due to the large size difference between Mn and M ions, leading to almost identical crystal field in $Mn^{2+}$ dope in two different M sites. This is consistent with the fact that varying the excitation wavelength yields similar emission spectra (Fig.4-6). This phenomenon has also been observed in the emission spectra of $Eu^{2+}$ in the host lattice of $M_2Si_5N_8$. Another possibility is that only one M site is occupied or preferential occupation of one of the two sites.

The excitation spectra of $M_2Si_5N_8: Mn^{2+}$ (M=Ca, Sr, Ba) extends a broad range of wavelengths and is consistent with the diffuse reflectance spectra. Definitely, the shortest strong excitation bands below 280 nm originate from the host lattice excitation as can be concluded from comparison with the reflection spectrum. The remaining excitation bands in the wavelength range of 280-550 can be assigned to the transitions of $Mn^{2+}$ from $^6A_1$ ($^6S$) to $^4E(^4D)$, $^4T_2$ ($^4D$), $[^4A_1,(^4G), ^4E(^4G)]$, $^4T_2$ ($^4G$) and $^4_T$, ($^4G$) levels, respectively, as illustrated in Fig 4-6.

The detailed information about the luminescence properties of $Mn^{2+}$-activated $M_2Si_5N_8$ (M=Ca, Sr, Ba) is summarized in Table 1.

**Table 1**: Composition, phase characteristics and photoluminescence properties of $Mn^{2+}$-doped $M_2Si_5N_8$ (M=Ca, Sr, Ba) (5 mol %) at room temperature

| $M_2Si_5N_8:Mn^{2+}$ | $Ca_2Si_5N_8:Mn^{2+}$ | $Sr_2Si_5N_8:Mn^{2+}$ | $Ba_2Si_5N_8:Mn^{2+}$ |
|---|---|---|---|
| Phase | $Ca_2Si_5N_8$ | $Sr_2Si_5N_8$ | $Ba_2Si_5N_8$ |
| Crystal System | Cc | $Pmm2_1$ | $Pmm2_1$ |
| Body color | Grey-white | Grey-white | Grey-White |
| Host lattice absorption edge (nm) | 250 | 265 | 270 |
| Absorption bands of $Mn^{2+}$ (nm) | 370-420 | 370-420 | 370-420 |
| Mn 5$d$ excitation bands (nm) | 250, 307, 396, 426, 448 | 250, 263, 316, 405, 427, 488 | 248, 261, 290, 405, 421, 486 |
| Emission maximum (nm) | 599 | 606 | 567 |
| Full width at half maximum broadband (FWHM) (nm) | 70 | 60 | 60 |

The appearance of the host lattice excitation band in the excitation spectrum of $Mn^{2+}$ indicates that there exists efficient energy transfer from the host lattice of $M_2Si_5N_8$ (M=Ca, Sr, Ba) to $Mn^{2+}$ ions.

The wavelength position of the emission bands of $Mn^{2+}$ depends strongly on the host lattice. It can vary from the green to the deep red region of the electromagnetic spectrum. Similar to the reasons for the long wavelength emission of $Eu^{2+}$ and $Ce^{3+}$ in host lattice of $M_2Si_5N_8$, the long wavelength emission of $Mn^{2+}$ in host lattice of $M_2Si_5N_8$ (M = Ca, Sr, Ba) can also be ascribed to the effect of a strong crystal field of $Mn^{2+}$ in the nitrogen environment.

The absorption and the excitation bands of $M_2Si_5N_8$:$Mn^{2+}$ perfectly match with the radiation of the GaN based LEDs in the range of 370-420 nm, so in combination with other phosphors these materials are capable of generating white light. This absorption can possibly be improved with sensitizer ions. It is interesting to note that the Mn-activated $M_2Si_5N_8$ (M = Ca, Sr, Ba) phosphors not only show strong absorption at 254 nm because of the host lattice absorption, but also that the host lattices can efficiently transfer the absorbed energy to $Mn^{2+}$ ions resulting in the typical yellow or red emissions of $Mn^{2+}$ ions, making them interesting for potential applications in the field of low-pressure mercury discharge lamps. Since $M_2Si_5N_8$ (M = Ca, Sr, Ba) host lattice has a lower band gap energy, a higher luminescence efficiency is expected for the Mn-activated $M_2Si_5N_8$ phosphors under CR-and X-ray excitation.

The Mn-activated $M_2Si_5N_8$ (M = Ca, Sr, Ba) phosphors have been prepared by a solid state reaction successfully and their photoluminescence properties were investigated. The $Mn^{2+}$-activated $M_2Si_5N_8$ phosphors exhibit narrow emission bands in the wavelength range of 500-700 nm with peak centers at about 599, 606 and 567 nm for M = Ca, Sr, Ba, respectively. $M_2Si_5N_8$:$Mn^{2+}$ samples are attractive LED phosphors with respect to the position of the absorption and emission bands. The host lattices of Mn-activated $M_2Si_5N_8$ phosphors not only show strong absorption at 254 nm, but also they can efficiently transfer the energy that they have absorbed to $Mn^{2+}$ ions which results in the typical yellow or red emissions of $Mn^{2+}$, making them interesting for potential applications in the field of low-pressure mercy discharge lamps. They also can be used as a new kind of phosphors under CR and X-ray excitation.

## Claims

1.  A metal-silicon-nitride phosphor that is activated by $Mn^{2+}$.

2.  The phosphor according to claim 1, wherein the phosphor is a $Mn^{2+}$-doped alkaline-earth metal-silicon-nitride and, wherein the alkaline-earth metal is selected from the group consisting of Mg, Ca, Sr, Ba, Zn, and Be.

3.  The phosphor according to claim 2, wherein the phosphor is represented by the formula $M_2Si_5N_8$:$Mn^{2+}$, wherein M is selected from the group consisting of Ca, Sr, and Ba.

4.  The phosphor according to claim 3, wherein Si is replaced partially or completely by Ge resulting in the formula $M_2Si_{(5-z)}Ge_{(z)}N_a$:$Mn^{2+}$ wherein $0 \leq z \leq 5$.

5.  The phosphor according to claim 3 or 4, wherein $(MSi)^{6+}$ is replaced partially or completely by $(LaAl)^{6+}$ resulting in the formula $M_{(2-u)}La_{(u)}Si_{(5-u)}Al_{(u)}N_8$:$Mn^{2+}$ wherein $0 \leq u \leq 2$, and wherein La is optionally replaced partially or completely by Sc, Y and/or a lanthanide, and wherein Al is optionally replaced partially or completely by B, Ga and/or Sc.

6.  The phosphor according to one of the claims 3 to 5, wherein $(MSi)^{6+}$ is replaced partially or completely by $(NaP)^{6+}$ resulting in the formula $M_{(2-v)}Na_{(v)}Si_{(5-v)}P_{(v)}N8$:$Mn^{2+}$ wherein $0 \leq v \leq 2$, and wherein Na is optionally replaced partially or completely by Li, K, Rb, and/or Cs.

7.  The phosphor according to one of the claims 3 to 6, wherein $(MN)^-$ is replaced partially or completely by $(NaO)^-$ resulting in the formula $M_{(2-w)}Na_{(w)}Si_5N_{(8-w)}O_{(w)}$:$Mn^{2+}$ wherein $0 \leq w \leq 2$, and wherein Na is optionally replaced partially or completely by Li, K, Rb, and/or Cs.

8.  The phosphor according to one of the claims 3 to 7, wherein $(SiN)^+$ is replaced partially or completely by $(AlO)^+$ resulting in the formula $M_2Si_{(5-t)}Al_{(t)}N_{(8-t)}O_{(t)}$:$Mn^{2+}$ wherein $0 \leq t \leq 2$, and wherein Al is optionally replaced partially or completely by B, Ga, and/or Sc.

9.  The phosphor according to one of the claims 1 to 8, wherein sensitizer ions, e.g. $Ce^{3+}$, $Pb^{2+}$, $Sb^{3+}$, $Sn^{2+}$, $Eu^{2+}$ are included in the phosphor for energy transfer to $Mn^{2+}$.

10.  A white-light emitting LED comprising a light emitting element and a first phosphor according to one of the claims 1 to 9, wherein said first phosphor is further combined with red, yellow, green, and/or blue-emitting phosphors.

Fig. 1

Fig. 2

**Fig. 3**

**Fig. 4**

Fig. 5

Fig. 6

**European Patent Office**

## EUROPEAN SEARCH REPORT

Application Number

EP 07 11 1382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/291246 A1 (HATTORI YASUSHI [JP] ET AL) 28 December 2006 (2006-12-28) * paragraphs [0066] - [0077] * | 1-3,9,10 | INV. C09K11/59 |
| X | JP 2005 272852 A (NICHIA KAGAKU KOGYO KK) 6 October 2005 (2005-10-06) * abstract * | 1-3,9,10 | |
| X | JP 2004 010786 A (NICHIA KAGAKU KOGYO KK) 15 January 2004 (2004-01-15) * abstract * | 1-3,9,10 | |
| X | EP 1 571 194 A (NICHIA CORP [JP]) 7 September 2005 (2005-09-07) * paragraphs [0069], [0183], [0189], [0190], [0193], [0320] * | 1,2,9,10 | |
| X | EP 1 296 376 A (PATRA PATENT TREUHAND [DE]) 26 March 2003 (2003-03-26) * paragraphs [0007] - [0012] * * claims 1-27 * | 1-3,9,10 | |
| | | | TECHNICAL FIELDS SEARCHED (IPC) |
| A | WO 2007/056311 A (INTEMATIX CORP [US]; LI YI-QUN [US]; DONG YI [US]; TAO DEJIE [US]; CHE) 18 May 2007 (2007-05-18) * page 22, line 24 - page 23, line 19 * | 1-3,9,10 | C09K |

~~The present search report has been drawn up for all claims~~

| Place of search | Date of completion of the search | Examiner |
|---|---|---|
| The Hague | 8 January 2008 | Kövecs, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

European Patent
Office

Application Number

EP 07 11 1382

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1(part), 2-3, 9(part),10 (part)-----------------------

☐ The present supplementary European search report has been drawn up for those parts of the European patent application which relate to the invention first mentioned in the claims (Rule 164 (1) EPC).

11

<table>
<tr><td>**European Patent Office**</td><td>**LACK OF UNITY OF INVENTION SHEET B**</td><td>Application Number<br>EP 07 11 1382</td></tr>
</table>

The Search Division considers that the present European patent application does not comply with the requirements of unity of invention and relates to several inventions or groups of inventions, namely:

1. claims: 1(part), 2-3, 9(part),10(part)

   A metal silicon nitrid phosphor having the formula MSiN: Mn and a LED using it.
   ---

2. claims: 1(part), 4, 9(part), 10(part)

   A metal silicon nitirde phosphor, having the formula MSiGeN: Mn and a LED using it.
   ---

3. claims: 1(part), 5, 9(part), 10(part)

   A metal silicon nitrid phosphor having the formula MLaSiAlN: Mn and LED using it.
   ---

4. claims: 1(part), 6, 9(part), 10(part)

   A metal silicon nitrid phosphor having the formula MNaSiPN:: Mn and LED using it.
   ---

5. claims: 1(part), 7, 9(part), 10(part)

   A metal silicon nitrid phosphor having the formula MNaSiNO: Mn and LED using it.
   ---

6. claims: 1(part), 8, 9(part), 10(part)

   A metal silicon nitrid phosphor having the formula MSiAlNO: Mn and LED using it.
   ---

**ANNEX TO THE EUROPEAN SEARCH REPORT
ON EUROPEAN PATENT APPLICATION NO.**

EP 07 11 1382

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2008

| Patent document cited in search report | | Publication date | Patent family member(s) | | Publication date |
|---|---|---|---|---|---|
| US 2006291246 | A1 | 28-12-2006 | CN | 1885581 A | 27-12-2006 |
| | | | JP | 2007005483 A | 11-01-2007 |
| JP 2005272852 | A | 06-10-2005 | NONE | | |
| JP 2004010786 | A | 15-01-2004 | NONE | | |
| EP 1571194 | A | 07-09-2005 | AU | 2003273003 A1 | 25-05-2004 |
| | | | WO | 2004039915 A1 | 13-05-2004 |
| | | | KR | 20050062623 A | 23-06-2005 |
| | | | US | 2006076883 A1 | 13-04-2006 |
| EP 1296376 | A | 26-03-2003 | DE | 10147040 A1 | 24-04-2003 |
| | | | JP | 2003206481 A | 22-07-2003 |
| | | | US | 2003094893 A1 | 22-05-2003 |
| WO 2007056311 | A | 18-05-2007 | KR | 20070049538 A | 11-05-2007 |